# EUROPEAN PATENT APPLICATION

(11) **EP 4 527 656 A1**
(43) Date of publication of application: **26.03.2025**
(21) Application number: 23867255.4
(22) Date of filing: 01.09.2023
(51) Int. Cl.: B60K 7/00, H02K 7/116

(54) **WHEEL HUB DRIVING ASSEMBLY**

(30) Priority: 22.09.2022 CN 202211177710
(71) Applicant: Shanghai Pangood Power Technology Co., Ltd., Shanghai 201615 (CN)
(72) Inventor: CHEN, Jinhua, Shanghai 201615 (CN); TANG, Lei, Shanghai 201615 (CN)
(74) Representative: Gerstein, Hans Joachim
(86) International application number: PCT/CN2023/116397
(87) International publication number: WO 2024/060964

(57) **Abstract**

A wheel hub driving assembly, comprising: a motor (100), an output end face (1001) and a non-output end face (1002) being provided on two axial sides of the motor (100), and an air gap face (1000) of the motor (100) being arranged parallel between the output end face (1001) and the non-output end face (1002); a speed reduction assembly (200), one side of the speed reduction assembly (200) in the axial direction being embedded in the output end face (1001), the other side of the speed reduction assembly (200) in the axial direction being in transmission connection with a wheel hub (700), and the motor (100) and the speed reduction assembly (200) being located inside the wheel hub (700); and a brake assembly (300), the brake assembly (300) being connected to the non-output end face (1002). The present invention further reduces the overall axial dimension and achieve the advantage of a small overall occupied space, allowing the design of a larger power density, and allowing enough space for additionally arranging corresponding sealing structures, thus ensuring that the wheel hub driving assembly can operate stably and reliably.

## Description

### FIELD

The present application relates to the technical field of wheel hubs, and in particular to a wheel hub driving assembly.

### BACKGROUND

A wheel hub driving assembly integrates a motor, a reduction system and a brake system into a wheel hub. The motor is a core component, which drives the wheel hub to rotate through its rotor shaft and the reduction system. The brake system brakes the wheel hub by holding the rotor shaft of the motor tightly.

With the popularization of the application of wheel hub drive, the demand for improving power and reducing volume of a wheel hub driving assembly has increased, especially for specific operating conditions and worksites. For example, how to lighten the existing structure of a wheel hub driving assembly in an original space, or how to improve the power density of the wheel hub driving assembly in the original space, has become a goal of designing the wheel hub driving assembly.

Further, in a case that a high-power wheel hub driving assembly is required but no more space can be provided in the axial direction for mounting the wheel hub driving assembly, the space for mounting the wheel hub driving assembly is extremely limited. In addition to considering the structural dimension to integrate the motor, the reduction system and the brake system into the wheel hub, it is also necessary to consider the overall structural strength, sealing and others of the wheel hub driving assembly.

For example, according to Chinese Patent Application No. CN2019209812597, titled "LOW-SPEED HIGH-TORQUE ELECTRIC WHEEL DEVICE AND ELECTRIC VEHICLE", the reduction system and the brake system are respectively arranged on both axial sides of the motor, and the axial dimension of the mounting space is relatively fixed, which is unsuitable for a design solution of a wheel hub driving assembly with high power density, and makes the design of sealing difficult.

### SUMMARY

To solve the above problem, a wheel hub driving assembly is provided according to the present application, which can further miniaturize the wheel hub driving assembly, increase the power density, and provide rational design of a sealing structure, in a limited mounting space, thereby improving the performance of the wheel hub driving assembly.

A wheel hub driving assembly includes:
a motor, where an output end face and a non-output end face are respectively provided on two axial sides of the motor, and an air gap face of the motor is parallel to the output end face and the non-output end face and is located between the output end face and the non-output end face;
a reduction assembly, where one axial side of the reduction assembly is embedded in the output end face, and the other axial side of the reduction assembly is in transmission connection with a wheel hub; and
a brake assembly, connected to the non-output end face;
where the motor, the reduction assembly and the brake assembly are located inside the wheel hub.

In a preferred embodiment, the wheel hub driving assembly further includes a housing, and the housing includes:
a front housing, including a front end cover and a front motor housing, where an inner ring of the front end cover extends to be connected to the front motor housing;
a rear housing, including a rear end cover and a rear motor housing, where an inner ring of the rear end cover extends to be connected to the rear motor housing; and
a side housing, connected to an outer ring of the front end cover and an outer ring of the rear end cover, where
the motor is arranged between an inner side surface of the front end cover and an inner side surface of the rear end cover, so that the output end face is formed on an outer side surface of the front end cover, and the non-output end face is formed on an outer side surface of the rear end cover; and
a radial inner side of the motor is sealed by the front motor housing and the rear motor housing, and a radial outer side of the motor is sealed by the side housing.

In a preferred embodiment, the motor includes:
a front stator, fixed to the inner side surface of the front end cover;
a rear stator, fixed to the inner side surface of the rear end cover;
a rotor, retained between the front stator and the rear stator, where an air gap is provided between the rotor and each of the front stator and the rear stator, and the air gap face is formed between the rotor and each of the front stator and the rear stator; and
a rotating shaft, rotatably connected to an inner ring of the front motor housing and an inner ring of the rear motor housing in a sealed manner, where a radial inner side of the rotor extends between the front motor housing and the rear motor housing, and is fixedly connected to the rotating shaft.

In a preferred embodiment, the front motor housing includes:
a front bottom wall; and
a front side wall, connected to an outer ring of the front bottom wall and the inner ring of the front end cover, where
the rotating shaft is rotatably connected to an inner ring of the front bottom wall in a sealed manner, and the reduction assembly is located between the front side wall and the rotating shaft, and is connected to the front bottom wall; and
the front bottom wall is located on an inner side of the front stator, so that part of the reduction assembly is located on the inner side of the front stator.

In a preferred embodiment, the front side wall extends to an outer side of the front end cover, and multiple reinforcement ribs are provided between the outer side surface of the front end cover and the front side wall.

In a preferred embodiment, the wheel hub driving assembly further includes a wheel hub bearing assembly, and the wheel hub bearing assembly includes:
an inner bearing ring, fixedly connected to a cantilever; and
an outer bearing ring, rotatably arranged between the inner bearing ring and the rotating shaft, where
the brake assembly and the wheel hub are respectively connected to two axial sides of the outer bearing ring, and an outer ring flange is provided on an outer ring of the outer bearing ring; and
one side of the reduction assembly away from the front bottom wall is sealed by the outer ring flange, and the reduction assembly is connected between the rotating shaft and the outer ring flange in a transmission manner.

In a preferred embodiment, the wheel hub driving assembly further includes:
a first bearing, connected between the front bottom wall and the rotating shaft;
a second bearing, connected between the rear motor housing and the rotating shaft; and
a third bearing, connected between the front side wall and the outer ring flange.

In a preferred embodiment, the wheel hub driving assembly further includes:
a first oil seal, arranged between the front bottom wall and the rotating shaft and located on an inner side of the first bearing;
a second oil seal, arranged between the rear motor housing and the rotating shaft and located on an outer side of the second bearing;
a third oil seal, arranged between the front side wall and the outer ring flange and located on an outer side of the third bearing; and
a fourth oil seal, arranged between the rotating shaft and the outer bearing ring.

In a preferred embodiment, the reduction assembly is a planetary gear reduction assembly. Two axial sides of a planetary carrier of the reduction assembly are limited by a fourth bearing and a limiting ring. The fourth bearing is connected between the front bottom wall and the planetary carrier, and the limiting ring is arranged between the planetary carrier and the third bearing.

In a preferred embodiment, the wheel hub driving assembly further includes a rotary transformer which is arranged between the rear motor housing and the rotating shaft and is located between the second bearing and a rotating shaft flange.

In a preferred embodiment, the rear housing further includes a brake housing which is connected to the outer side surface of the rear end cover. The brake assembly is located inside the brake housing, and is fixedly connected to the cantilever.

In a preferred embodiment, the brake assembly includes:
a brake shoe, where
an outer ring of the cantilever is provided with a cantilever flange which is located inside the brake housing, and the brake shoe is arranged outside the cantilever, and is fixed to the cantilever flange and the brake housing.

Compared with the conventional technology, the present technical solutions have the following advantages.

Firstly, the reduction assembly and the brake assembly are respectively arranged on the two axial sides of the motor, so that the three are overlapped in the axial direction. Further, part of the reduction assembly is embedded in the output end face of the motor, thereby reducing the overall axial dimension, so that the space occupied by the entire assembly is small, a high power density can be achieved, and there is sufficient space for arranging a corresponding sealing structure. Thus, the wheel hub driving assembly operates stably and reliably.

Secondly, according to the present application, the air gap face of the motor is parallel to the output end face and the non-output end face. Therefore, the output torque of the motor can be adjusted only by changing the radial dimension of the motor, and the axial dimension of the motor is almost unchanged. It can be seen that, the space for designing the motor can be increased accordingly on the premise that the axial dimension of the entire wheel hub driving assembly is small.

Thirdly, the brake assembly and the reduction assembly are designed with the radial dimension of the motor as an upper limit, so that the reduction assembly with good transmission performance and the brake assembly with good braking performance can be designed. Furthermore, each of the motor, the reduction assembly and the brake assembly is of a flat structure, so that the wheel hub driving assembly formed by assembling the motor, the reduction assembly and the brake assembly is flat. Thus, the wheel hub driving assembly can utilize the space inside the wheel hub and is disposed in the wheel hub.

Fourthly, the bearings and the oil seals are compactly arranged on the inner side of the motor, thereby making full use of the space and further reducing the overall occupied space.

The present application is further described below in conjunction with the accompanying drawings and embodiments.

### BRIEF DESCRIPTION OF THE DRAWINGS

FIG. 1 is a schematic structural view showing an assembly of a wheel hub driving assembly and a wheel hub according to the present application;
FIG. 2 is a sectional view of a wheel hub driving assembly according to the present application;
FIG. 3 is a schematic enlarged view of a portion A in FIG. 2;
FIG. 4 is a front view of a wheel hub driving assembly according to the present application;
FIG. 5 is a back view of a wheel hub driving assembly according to the present application;
FIG. 6 is an exploded view of a wheel hub driving assembly according to the present application;
FIG. 7 is a schematic structural view of a housing according to the present application;
FIG. 8 is a front view of a housing according to the present application;
FIG. 9 is a back view of a housing according to the present application;
FIG. 10 is an exploded view of a housing according to the present application; and
FIG. 11 is a schematic structural view showing an assembly of a housing and a cantilever according to the present application.

### DETAILED DESCRIPTION OF THE EMBODIMENTS

The present application is disclosed in the following description so that those skilled in the art are capable of implementing the present application. Preferred embodiments in the following description are only examples, and those skilled in the art may think of other obvious variations. The basic principle of the present application defined in the following description may be applied to other implementation solutions, modified solutions, improved solutions, equivalent solutions and other technical solutions without departing from the spirit and scope of the present application.

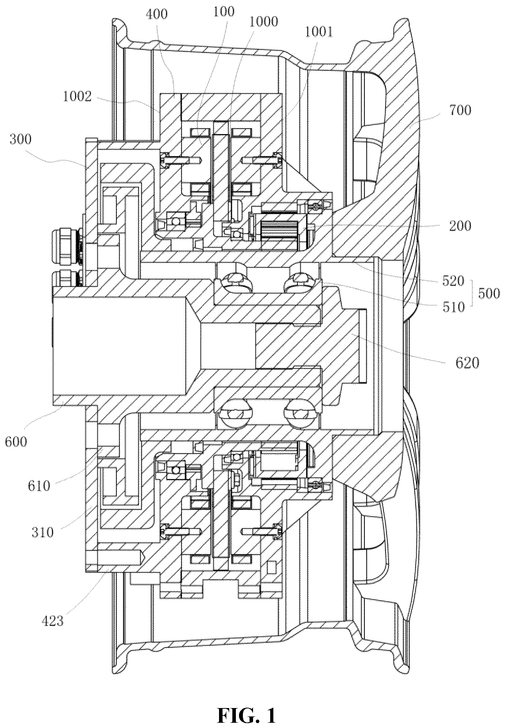

As shown in FIG. 1, a wheel hub driving assembly includes:
a motor 100, where an output end face 1001 and a non-output end face 1002 are respectively provided on two sides of the motor 100 in the axial direction, and an air gap face 1000 of the motor 100 is parallel to the output end face 1001 and the non-output end face 1002 and is arranged between the output end face 1001 and the non-output end face 1002;
a reduction assembly 200, where one side of the reduction assembly 200 in an axial direction is embedded in the output end face 1001, the other side of the reduction assembly 200 in the axial direction is in transmission connection with a wheel hub 700, and the motor 100 and the reduction assembly 200 are located in the wheel hub 700; and
a brake assembly 300 connected to the non-output end face 1002.

The reduction assembly 200 and the brake assembly 300 are arranged on the two sides of the motor 100 in the axial direction, so that the motor 100, the reduction assembly 200 and the brake assembly 300 overlap in the axial direction. Further, part of the reduction assembly 200 is embedded in the output end face 1001 of the motor 100, and therefore, the overall axial dimension is reduced and the overall space occupied is small. In this way, a high power density can be achieved, and there is sufficient space for arranging a corresponding sealing structure, so that the wheel hub driving assembly can operate stably and reliably. As the output torque of a conventional radial motor increases, the axial dimension of the radial motor also increases. According to the present application, the air gap face 1000 of the motor 100 is parallel to the output end face 1001 and the non-output end face 1002, so that the output torque of the motor 100 can be adjusted only by changing the radial dimension of the motor 100, and the axial dimension of the motor 100 is almost unchanged. Thus, the space for designing the motor 100 can be increased accordingly on the premise that the overall axial dimension of the wheel hub driving assembly is small. In addition, the motor 100 is an axial field motor, which has the characteristics of small axial dimension, high power density, light weight and high output torque and the like, thereby ensuring that the wheel hub driving assembly has the advantage of a small overall axial dimension. Moreover, the brake assembly 300 and the reduction assembly 200 are designed with the radial dimension of the motor 100 as an upper limit, so that the reduction assembly 200 with good transmission performance and the brake assembly 300 with good braking performance can be designed. Furthermore, each of the motor 100, the reduction assembly 200 and the brake assembly 300 is of a flat structure, so that the wheel hub driving assembly formed by assembling the motor 100, the reduction assembly 200 and the brake assembly 300 is flat, and the wheel hub driving assembly can utilize the space inside the wheel hub 700 and can be disposed in the wheel hub 700.

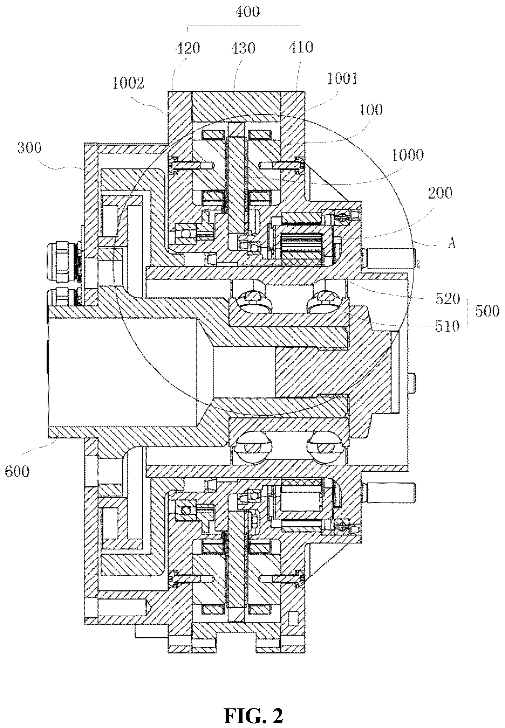

As shown in FIG. 2, and FIG. 7 to FIG. 10, the wheel hub driving assembly further includes a housing 400, the housing 400 includes:
a front housing 410, including a front end cover 411 and a front motor housing 412, where an inner ring of the front end cover 411 extends and is connected to the front motor housing 412;
a rear housing 420, including a rear end cover 421 and a rear motor housing 422, where an inner ring of the rear end cover 421 extends and is connected to the rear motor housing 422; and
a side housing 430, connected to an outer ring of the front end cover 411 and an outer ring of the rear end cover 421.

The motor 100 is arranged between an inner side surface of the front end cover 411 and an inner side surface of the rear end cover 421. The output end face 1001 is formed on an outer side surface of the front end cover 411, and the non-output end face 1002 is formed on an outer side surface of the rear end cover 421. A radial inner side of the motor 100 is sealed by the front motor housing 412 and the rear motor housing 422, and a radial outer side of the motor 100 is sealed by the side housing 430.

The motor 100 is arranged between the front end cover 411 and the rear end cover 421. The reduction assembly 200 is embedded in the output end face 1001 formed by the outer side surface of the front end cover 411, and is specifically arranged in the front motor housing 412. The brake assembly 300 is arranged on the non-output end face 1002 formed by the outer side surface of the rear end cover 421. The radial inner side of the motor 100 is sealed by the front motor housing 412 and the rear motor housing 422, and the radial outer side of the motor is sealed by the side housing 430, so that the motor 100 is sealed inside the housing 400. Therefore, a coolant may be introduced into a cavity of the housing 400 for accommodating the motor 100 to cool the motor 100, so as to prevent the temperature of the motor 100 from rising during operation, thereby ensuring reliable operation of the motor 100. Moreover, the motor 100, the reduction assembly 200 and the brake assembly 300 share the housing 400, so that the structure is compact and the axial dimension can be prevented from being increased.

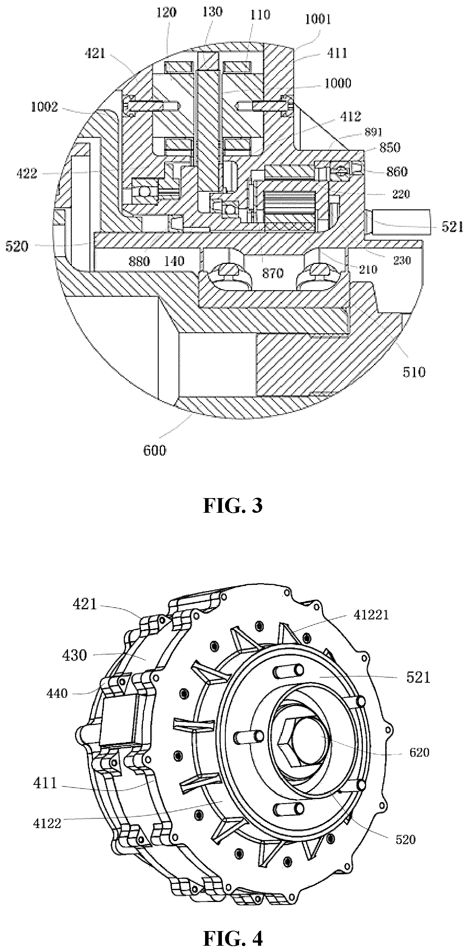

It is known from the above description that, the motor 100 may be an axial field motor, which has a radial dimension much larger than its axial dimension. The motor 100 may further be a double-stator single-rotor axial field motor. Referring to FIG. 3, FIG. 7 and FIG. 10, the motor 100 includes:
a front stator 110, fixed to the inner side surface of the front end cover 411;
a rear stator 120, fixed to the inner side surface of the rear end cover 421;
a rotor 130, retained between the front stator 110 and the rear stator 120, where an air gap is provided between the rotor 130 and each of the front stator 110 and the rear stator 120, and an air gap face is formed between the rotor 130 and each of the front stator 110 and the rear stator 120; and
a rotating shaft 140, rotatably connected to an inner ring of the front motor housing 412 and an inner ring of the rear motor housing 422 in a sealed manner, where a radial inner side of the rotor 130 extends between the front motor housing 412 and the rear motor housing 422, and is fixedly connected to the rotating shaft 140.

The front stator 110 may be fixed to the inner side surface of the front end cover 411 through a first bolt 891. The front end cover 411 is provided with a countersunk hole, so that the first bolt 891 is hidden in the front end cover 411 to prevent the first bolt 891 from protruding outward and increasing the volume. Similarly, the rear stator 110 may be fixed to the inner side surface of the rear end cover 421 through another first bolt 891, and the rear end cover 421 is provided with a countersunk hole for hiding the first bolt 891.

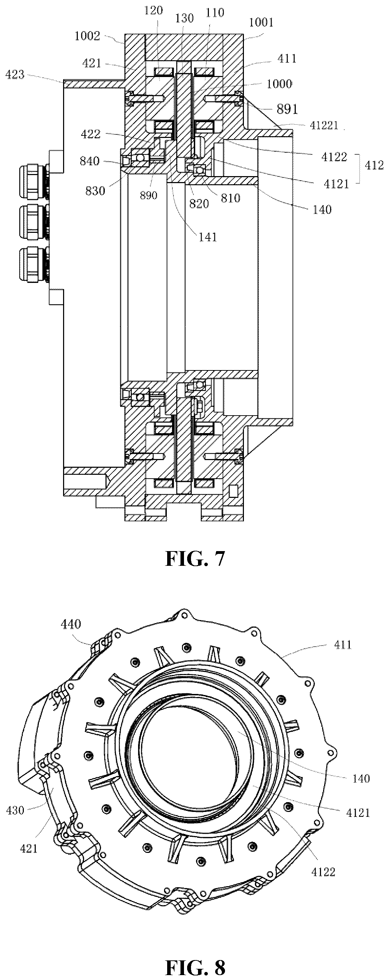

Referring to FIG. 7, the front stator 110 is annular, and is accommodated between the front motor housing 412 and the side housing 430. The rear stator 120 is also annular, and is accommodated between the rear end cover 421 and the side housing 430. The rotor 130 is also annular, and accordingly, the front motor housing 412 and the rear motor housing 422 are respectively located on both sides of the rotor 130 in the axial direction, so that the radial inner side of the rotor 130 is fixedly connected to a rotating shaft flange 141 provided on an outer ring of the rotating shaft 140. The rotating shaft flange 141 and the rear motor housing 422 are arranged on a same side, i.e. on a rear side of the rotor 130 in the axial direction. It can be seen that, the rotating shaft flange 141 is located on an inner side of the rear motor housing 422, and the radial inner side of the rotor 130 may be fixed to the rotating shaft flange 141 through a bolt.

As shown in FIG. 8 to FIG. 10, outer rings of the side housing 430, the front end cover 411 and the rear end cover 421 are provided with connecting lugs 440, and the connecting lugs 440 can be connected by bolts to achieve fixation. Multiple connecting lugs 440 are provided on each of two axial sides of the side housing 430, and the connecting lugs on the two axial sides of the side housing 430 are correspondingly connected to the front end cover 411 and the rear end cover 421. The connecting lugs 440 located on one axial side of the side housing 430 are in one-to-one correspondence with the connecting lugs 440 located on the other axial side of the side housing 430, and the connecting lugs 440 on each of the two axial sides of the side housing 430 are circumferentially spaced apart from each other. During connection, the front end cover 411 is abutted against one side of the side housing 430 in the axial direction, and the connecting lugs 440 on the front end cover 411 and the connecting lugs 440 on the side of the side housing 430 are in one-to-one correspondence and are connected by bolts. The rear end cover 421 is abutted against the other side of the side housing 430 in the axial direction, and the connecting lugs on the rear end cover 421 and the connecting lugs on the other side of the side housing 430 for connection with the rear end cover 421 are connected by bolts. In this way, the side housing 430, the front end cover 411 and the rear end cover 421 are fixed relative to each other.

As shown in FIG. 3 and FIG. 7, the front motor housing 412 includes:
a front bottom wall 4121; and
a front side wall 4122, connected to an outer ring of the front bottom wall 4121 and the inner ring of the front end cover 411.

The rotating shaft 140 is rotatably connected to an inner ring of the front bottom wall 4121 in a sealed manner. The reduction assembly 200 is located between the front side wall 4122 and the rotating shaft 140, and is connected to the front bottom wall 4121. The front bottom wall 4121 is located on an inner side of the front stator 110. Thus, part of an inner ring of the reduction assembly 200 is located on the inner side of the front stator 110.

The front bottom wall 4121 and the rotating shaft flange 141 of the rotating shaft 140 are substantially parallel to each other, and are respectively arranged on the two sides of the rotor 130 in the axial direction. The front bottom wall 4121 is located on the inner side of the annular front stator 110, so that part of the reduction assembly 200 connected to the front bottom wall 4121 is embedded in the inner side of the front stator 110, and the space arrangement is reasonable and the overall axial dimension is small.

As shown in FIG. 7, the inner ring of the front bottom wall 4121 extends to the inner side of the rotor 130. A first bearing 810 is further provided between the inner ring of the front bottom wall 4121 and the rotating shaft 140, and a second bearing 830 is further provided between the rear motor housing 422 and the rotating shaft 140, so that the rotating shaft 140 can smoothly rotate relative to the front housing 410 and the rear housing 420. The first bearing 810 and the second bearing 830 may be deep groove ball bearings, angular contact bearings or the like.

Referring to FIG. 7, a first oil seal 820 is further provided between the front bottom wall 4121 and the rotating shaft 140 to prevent lubricating oil in the reduction assembly 200 from entering the cavity of the housing 400 for accommodating the motor 100. A second oil seal 840 is also provided between the rear motor housing 422 and the rotating shaft 140 to prevent flying debris produced by the brake assembly 300 from entering the cavity of the housing 400 for accommodating the motor 100.

Continuously referring to FIG. 7, each of the inner ring of the front bottom wall 4121, the inner ring of the rear motor housing 422 and the outer ring of the rotating shaft 140 is in a stepped shape to limit and fix the bearings and realize oil sealing. The first bearing 810 is described as an example. Two sides of the first bearing 810 in the axial direction are respectively abutted against a step of the inner ring of the front bottom wall 4121 and a step of the outer ring of the rotating shaft 140 and are located therebetween, thereby limiting and fixing the first bearing 810.

The first oil seal 820 is located on an inner side of the first bearing 810 away from the reduction assembly 200, and the second oil seal 840 is located on an outer side of the second bearing 830 facing the brake assembly 300, referring to FIG. 3 and FIG. 7. The first oil seal 820 is adjacent to the first bearing 810, the second bearing 830 is adjacent to the second oil seal 840, the bearings and the oil seals are located on the inner side of the motor 100, and the step structures are used to arrange the bearings and the oil seals compactly, so as to avoid the risk of increasing the sizes of the bearings, thereby providing more space for designing the motor, the reduction assembly and the brake assembly.

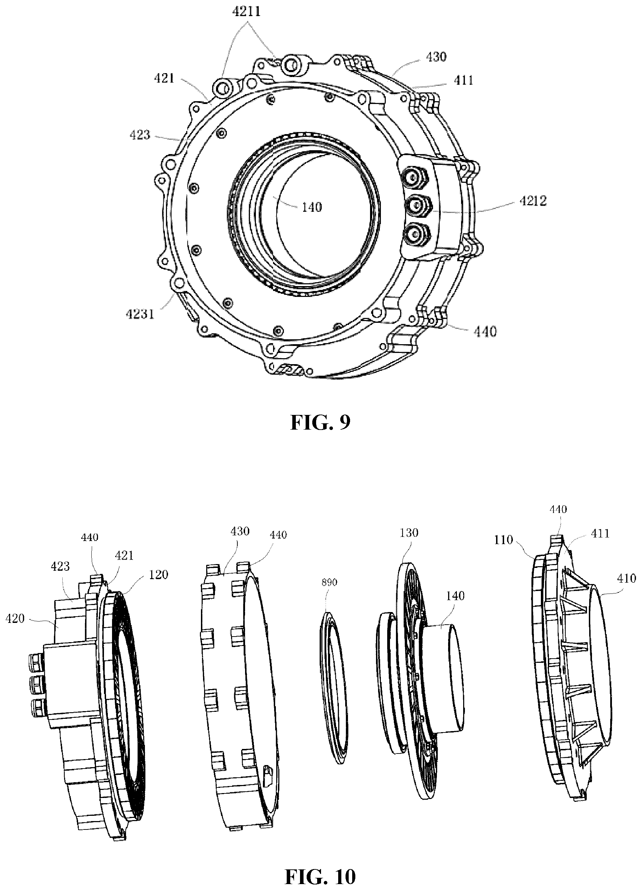

As shown in FIG. 7 and FIG. 10, a rotary transformer 890 is further provided between the rear motor housing 422 and the rotating shaft 140. The rotary transformer 890 is arranged between the rear motor housing 422 and the rotating shaft 140, and is located between the second bearing 830 and the rotating shaft flange 141. The rotary transformer 890 is an electromagnetic sensor for measuring an angular displacement and an angular velocity of a rotating shaft. From the above, the rotary transformer 890 is also arranged on the inner side of the motor, and is compactly arranged together with the bearings and the oil seals. In this way, the space is fully utilized, and the overall occupied space is further reduced.

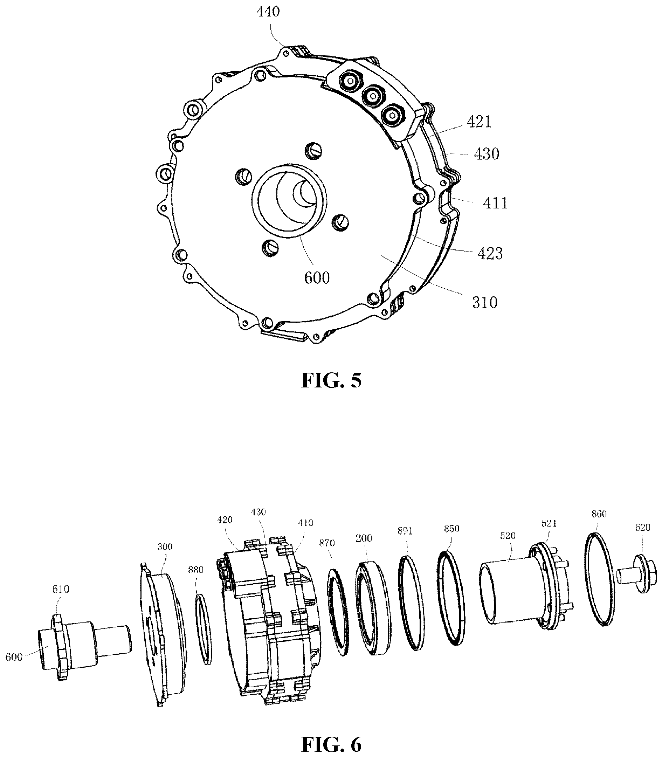

As shown in FIG. 1, FIG. 3 and FIG. 6, the wheel hub driving assembly further includes a wheel hub bearing assembly 500, and the wheel hub bearing assembly 500 includes:
an inner bearing ring 510, fixedly connected to a cantilever 600; and
an outer bearing ring 520, rotatably arranged between the inner bearing ring 510 and the rotating shaft 140, where two axial sides of the outer bearing ring 520 are respectively connected to the brake assembly 300 and the wheel hub 700, an outer ring of the outer bearing ring 520 is provided with an outer ring flange 521, one side of the reduction assembly 200 away from the front bottom wall 4121 is sealed by the outer ring flange 521, and the reduction assembly 200 is in transmission connection between the rotating shaft 140 and the outer ring flange 521. The motor 100 drives the outer bearing ring 520 to rotate through the reduction assembly 200, and the wheel hub 700 rotates along with the outer bearing ring 520.

An axial dimension of the outer bearing ring 520 is larger than an axial dimension of the inner bearing ring 510. A right side of the outer bearing ring 520 extends out of the front housing 410 to be connected to an end face of the wheel hub 700, and an outer periphery of the wheel hub 700 surrounds the wheel hub driving assembly. Referring to FIG. 1, the wheel hub 700 abuts against an outer side of the outer ring flange 521, and can rotate along with the outer bearing ring 520. A left side of the outer bearing ring 520 is connected to the brake assembly 300 for braking. Continuing to refer to FIG. 1, the cantilever 600 is inserted into the inner bearing ring 510 from a left side of the inner bearing ring 510, and is connected to a second bolt 620 on a right side of the inner bearing ring 510, so that the cantilever 600 is fixed to the inner bearing ring 510. In this way, the cantilever 600 can support the entire wheel hub driving assembly. The second bolt 620 is located inside the outer bearing ring 520, referring to FIG. 1 and FIG. 4.

As shown in FIG. 3 and FIG. 7, the outer bearing ring 520 rotates relative to the front housing 410. A third bearing 850 is provided between the outer ring flange 521 of the outer bearing ring 520 and the front side wall 4122 to ensure that the outer bearing ring rotates smoothly. The third bearing 850 may be a deep groove ball bearing, an angular contact bearing or the like. A third oil seal 860 is further provided between the outer ring flange 521 and the front side wall 4122, and a fourth oil seal 880 is provided between the rotating shaft 140 and the outer bearing ring 520. The fourth oil seal 880 is located on an inner side of the rotating shaft flange 141, so that the reduction assembly 200 between the front bottom wall 4121 and the outer ring flange 521 can be sealed to seal the lubricating oil in the reduction assembly 200. The third oil seal 860 is adjacent to the third bearing 850, and is located on an outer side of the third bearing 850.

It is further noted that, the third bearing 850 may be configured to make the wheel hub bearing assembly 500 and a cavity of the front housing 410 for accommodating the reduction assembly 200 concentric, thereby preventing abrasion of the third bearing 860 caused by the non-concentricity of the two.

As shown in FIG. 3 and FIG. 7, the reduction assembly 200 is located at the rotating shaft 140 and the front side wall 4122, and is enclosed between the front bottom wall 4121 and the outer ring flange 521. The reduction assembly 200 may be a planetary gear reduction assembly, which has a relatively small axial dimension and a relatively large radial dimension and can better fit the shape of the axial field motor, thereby improving the space utilization. Compared with the conventional radial motor, the combination of the planetary gear reduction assembly and the axial field motor can enable the planetary gear reduction assembly to have a larger radial dimension while maintaining the same volume, thereby achieving a higher transmission ratio and a higher output torque.

Specifically, the reduction assembly 200 includes a sun gear 210, a gear ring 220 and a planetary gear carrier assembly 230. The sun gear 210 is fixed to the outer ring of the rotating shaft 140, and may be in interference fit with the outer ring of the rotating shaft 140. The gear ring 220 is fixed to an inner ring of the front side wall 4122, and may be in interference fit with the inner ring of the front side wall 4122. The planetary gear carrier assembly 230 is in transmission connection between the sun gear 210 and the gear ring 220. The planetary gear carrier assembly 230 includes multiple planetary gears engaged between the sun gear 210 and the gear ring 220, and a planetary carrier connected to the multiple planetary gears. A fourth bearing 870 is provided between the planetary carrier and the front bottom wall 4121 for axially limiting the planetary gear carrier assembly 230, so that the planetary gear carrier assembly 230 can rotate relative to the front housing 410. The fourth bearing 870 may be a thrust roller bearing or the like. The outer ring flange 521 is connected to one side of the planetary carrier away from the front bottom wall 4121, and rotates along with the planetary carrier.

As shown in FIG. 3, a limiting ring 891 is provided between the gear ring 220 and the third bearing 850, so that two sides of the gear ring 220 in the circumferential direction are limited between a step on the inner ring of the front side wall 4122 and the limiting ring 891.

As shown in FIG. 4 and FIG. 7, the front side wall 4122 extends to the outside of the front end cover 411, and multiple reinforcement ribs 41221 are provided between the outer side surface of the front end cover 411 and the front side wall 4122, so as to ensure the structural strength and reliable operation of the product.

As shown in FIG. 1, FIG. 5 and FIG. 7, the rear housing 420 further includes a brake housing 423 which is connected to the outer side surface of the rear end cover 421. The brake assembly 300 is located inside the brake housing 423, and is fixedly connected to the cantilever 600.

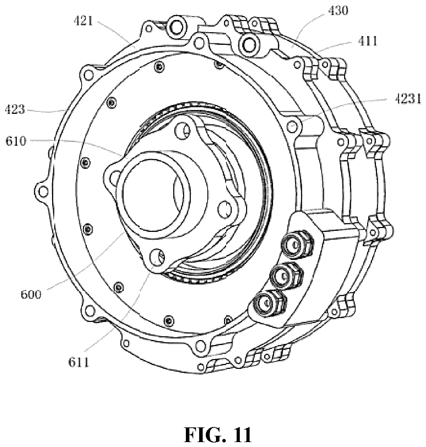

Specifically, a cantilever flange 610 is provided on an outer ring of the cantilever 600, and the cantilever flange 610 is located inside the brake housing 423. A brake shoe 310 of the brake assembly 300 is sleeved on the outside of the cantilever 600, and is fixed to the cantilever flange 610 and the brake housing 423. Referring to FIG. 11, the cantilever flange 610 is provided with a cantilever hole 611, and an outer ring of the brake housing 423 is provided with a brake hole 4231. The brake shoe 310 abuts against the cantilever flange 610 and the brake housing 423, the brake shoe 310 is provided with mounting holes in correspondence with the cantilever hole 611 and the brake hole 4231, and corresponding holes are connected by bolts, so as to achieve fixation.

As shown in FIG. 9, the rear end cover 421 is provided with an inlet 4211 and an outlet 4211 in communication with the cavity for the motor, so that the coolant can be introduced into or discharged from the cavity for the motor through the inlet 4211 and the outlet 4211. In addition, the rear end cover 421 may be further provided with a three-phase wire outlet structure 4212 for wire outlet of a stator winding.

A method for assembling the wheel hub driving assembly is as follows.

The motor 100 is fixed between the front housing 410 and the rear housing 420, referring to FIG. 7. The rotating shaft 140 of the motor 100 is sleeved in the front housing 410 and the rear housing 420. The second bearing 830, the second oil seal 840 and the rotary transformer 890 are arranged between the rotating shaft 140 and the front housing 410, and the first bearing 810 and the first oil seal 820 are arranged between the rotating shaft 140 and the rear housing 420.

The reduction assembly 200 is arranged in the front side wall 4122 of the rear housing 420, and the reduction assembly 200 is in transmission connection with the outer ring of the rotating shaft 140. The fourth bearing 870 is arranged between the reduction assembly 200 and the front bottom wall 4121 of the rear housing, referring to FIG. 3 and FIG. 7.

The wheel hub bearing assembly 500 is arranged in the rotating shaft 140, referring to FIG. 3. The outer bearing ring 520 is rotatably arranged between the inner bearing ring 510 and the rotating shaft 140, and the outer ring flange 521 on the outer ring of the outer bearing ring 520 is connected to the front side wall 4122 of the front housing 410. The third bearing 850, the third oil seal 860 and the limiting ring 891 are arranged between the outer ring flange 521 and the front side wall 4122. Then the cantilever 600 is fixedly connected to an inner ring of the inner bearing ring 510.

The brake assembly 300 is fixed to the cantilever 600 and fixed in the brake housing 423 of the rear housing 420, referring to FIG. 2 and FIG. 7.

The wheel hub 700 is fixed to a bolt on the outer side of the outer ring flange 521, so that the wheel hub driving assembly is assembled, referring to FIG. 1 and FIG. 4.

It can be seen that, by using the effective space inside the wheel hub 700, the motor 100, the reduction assembly 200, the brake assembly 300, the bearings, the oil seals, etc., are rationally integrated in the wheel hub driving assembly. Further, the brake assembly 300 and the reduction assembly 200 are respectively arranged on two sides of the motor 100 in the axial direction, so as to facilitate the assembling. In summary, the reduction assembly 200 and the brake assembly 300 are respectively arranged on the two sides of the motor 100 in the axial direction, so that the three overlap in the axial direction. Part of the reduction assembly 200 is embedded in the output end face 1001 of the motor 100, further reducing the overall axial dimension, so that the entire assembly occupies a small space. In this way, high power density can be achieved, and sufficient space can be provided for arranging a corresponding sealing structure, so that the wheel hub driving assembly can operate stably and reliably. According to the present application, the air gap face 1000 of the motor 100 is parallel to the output end face 1001 and the non-output end face 1002, so that the output torque of the motor 100 can be adjusted only by changing the radial dimension of the motor 100, while the axial dimension of the motor 100 is substantially unchanged. It can be seen that, the design space of the motor 100 is increased accordingly on the premise that the axial dimension of the entire wheel hub driving assembly is small. Moreover, the brake assembly 300 and the reduction assembly 200 are designed with the radial dimension of the motor 100 as the upper limit, so that the reduction assembly 200 with good transmission performance and the brake assembly 300 with good braking performance can be designed. Furthermore, the motor 100, the reduction assembly 200 and the brake assembly 300 are of flat structures, so that the wheel hub driving assembly formed by assembling the three is flat, so that the space inside the wheel hub 700 can be utilized, and the wheel hub driving assembly is disposed in the wheel hub 700. The bearings and the oil seals are compactly arranged on the inner side of the motor, thereby making full use of the space and further reducing the overall occupied space.

The embodiments described above are merely for illustrating the technical concept and characteristics of the present application. The object thereof is to enable those skilled in the art to understand the content of the present application and implement based on the content. The scope of the present application is not limited to only these embodiments, that is, any equivalent variations and modifications based on the spirit disclosed in the present application are deemed to fall into the scope of the present application.

## Claims

1. A wheel hub driving assembly, comprising:
a motor (100), wherein an output end face (1001) and a non-output end face (1002) are respectively provided on two axial sides of the motor (100), and an air gap face (1000) of the motor (100) is parallel to the output end face (1001) and the non-output end face (1002) and is located between the output end face (1001) and the non-output end face (1002);
a reduction assembly (200), wherein one axial side of the reduction assembly (200) is embedded in the output end face (1001), and the other axial side of the reduction assembly (200) is in transmission connection with a wheel hub (700); and
a brake assembly (300), connected to the non-output end face (1002);
wherein the motor (100), the reduction assembly (200) and the brake assembly (300) are located inside the wheel hub (700).

2. The wheel hub driving assembly according to claim 1, further comprising a housing (400), which comprises:
a front housing (410), comprising a front end cover (411) and a front motor housing (412), wherein an inner ring of the front end cover (411) extends to be connected to the front motor housing (412);
a rear housing (420), comprising a rear end cover (421) and a rear motor housing (422), wherein an inner ring of the rear end cover (421) extends to be connected to the rear motor housing (422); and
a side housing (430), connected to an outer ring of the front end cover (411) and an outer ring of the rear end cover (421), wherein
the motor (100) is arranged between an inner side surface of the front end cover (411) and an inner side surface of the rear end cover (421), so that the output end face (1001) is formed on an outer side surface of the front end cover (411), and the non-output end face (1002) is formed on an outer side surface of the rear end cover (421); and
a radial inner side of the motor (100) is sealed by the front motor housing (412) and the rear motor housing (422), and a radial outer side of the motor (100) is sealed by the side housing (430).

3. The wheel hub driving assembly according to claim 2, wherein the motor (100) comprises:
a front stator (110), fixed to the inner side surface of the front end cover (411);
a rear stator (120), fixed to the inner side surface of the rear end cover (421);
a rotor (130), retained between the front stator (110) and the rear stator (120), wherein an air gap is provided between the rotor (130) and each of the front stator (110) and the rear stator (120), and the air gap face is formed between the rotor (130) and each of the front stator (110) and the rear stator (120); and
a rotating shaft (140), rotatably connected to an inner ring of the front motor housing (412) and an inner ring of the rear motor housing (422) in a sealed manner, wherein a radial inner side of the rotor (130) extends between the front motor housing (412) and the rear motor housing (422), and is fixedly connected to the rotating shaft (140).

4. The wheel hub driving assembly according to claim 3, wherein the front motor housing (412) comprises:
a front bottom wall (4121); and
a front side wall (4122), connected to an outer ring of the front bottom wall (4121) and the inner ring of the front end cover (411), wherein
the rotating shaft (140) is rotatably connected to an inner ring of the front bottom wall (4121) in a sealed manner, and the reduction assembly (200) is located between the front side wall (4122) and the rotating shaft (140), and is connected to the front bottom wall (4121); and
the front bottom wall (4121) is located on an inner side of the front stator (110), so that part of an inner ring of the reduction assembly (200) is located on the inner side of the front stator (110).

5. The wheel hub driving assembly according to claim 4, wherein the front side wall (4122) extends to an outer side of the front end cover (411), and a plurality of reinforcement ribs (41221) are provided between the outer side surface of the front end cover (411) and the front side wall (4122).

6. The wheel hub driving assembly according to claim 4, further comprising a wheel hub bearing assembly (500) which comprises:
an inner bearing ring (510), fixedly connected to a cantilever (600); and
an outer bearing ring (520), rotatably arranged between the inner bearing ring (510) and the rotating shaft (140), wherein
the brake assembly (300) and the wheel hub (700) are respectively connected to two axial sides of the outer bearing ring (520), and an outer ring flange (521) is provided on an outer ring of the outer bearing ring (520); and
one side of the reduction assembly (200) away from the front bottom wall (4121) is sealed by the outer ring flange (521), and the reduction assembly (200) is connected between the rotating shaft (140) and the outer ring flange (521) in a transmission manner.

7. The wheel hub driving assembly according to claim 6, further comprising:
a first bearing (810), connected between the front bottom wall (4121) and the rotating shaft (140);
a second bearing (830), connected between the rear motor housing (422) and the rotating shaft (140); and
a third bearing (850), connected between the front side wall (4122) and the outer ring flange (521).

8. The wheel hub driving assembly according to claim 7, further comprising:
a first oil seal (820), arranged between the front bottom wall (4121) and the rotating shaft (140) and located on an inner side of the first bearing (810);
a second oil seal (840), arranged between the rear motor housing (422) and the rotating shaft (140) and located on an outer side of the second bearing (840);
a third oil seal (860), arranged between the front side wall (4122) and the outer ring flange (521) and located on an outer side of the third bearing (850); and
a fourth oil seal (880), arranged between the rotating shaft (140) and the outer bearing ring (520).

9. The wheel hub driving assembly according to claim 7, wherein
the reduction assembly (200) is a planetary gear reduction assembly, and two axial sides of a planetary carrier of the reduction assembly (200) are limited by a fourth bearing (870) and a limiting ring (891); and
the fourth bearing (870) is connected between the front bottom wall (4121) and the planetary carrier, and the limiting ring (891) is arranged between the planetary carrier and the third bearing (850).

10. The wheel hub driving assembly according to claim 7, further comprising a rotary transformer (890), which is arranged between the rear motor housing (422) and the rotating shaft (140) and is located between the second bearing (830) and a rotating shaft flange (141) of the rotating shaft (140).

11. The wheel hub driving assembly according to claim 6, wherein the rear housing (420) further comprises a brake housing (423) connected to the outer side surface of the rear end cover (421), and the brake assembly (300) is located inside the brake housing (423) and is fixedly connected to the cantilever (600).

12. The wheel hub driving assembly according to claim 11, wherein the brake assembly (300) comprises:
a brake shoe (310), wherein
an outer ring of the cantilever (600) is provided with a cantilever flange (610) which is located inside the brake housing (423), and the brake shoe (310) is arranged outside the cantilever (600) and is fixed to the cantilever flange (610) and the brake housing (423).
